# FASCICULE DE BREVET EUROPEEN

(11) **EP 4 202 564 B1**
(45) Date de publication et mention de la délivrance du brevet: **18.06.2025**
(21) Numéro de dépôt: 21216851.2
(22) Date de dépôt: 22.12.2021
(51) Int. Cl.: G04B 17/06

(54) **MOUVEMENT MECANIQUE HORLOGER COMPRENANT UN BALANCIER PIVOTE MAGNETIQUEMENT**
MECHANISCHES UHRWERK MIT EINER MAGNETISCH SCHWENKBAREN UNRUH
MECHANICAL TIMEPIECE MOVEMENT COMPRISING A MAGNETICALLY PIVOTED BALANCE

(43) Date de publication de la demande: 28.06.2023
(73) Titulaire: The Swatch Group Research and Development Ltd, 2074 Marin (CH)
(72) Inventeur: CALIC, Milan, 1093 La Conversion (CH); MIGNOT, Jean-Pierre, 25300 Pontarlier (FR)
(74) Mandataire: ICB SA

(56) Documents cités:
- WO-A2-2006/045824
- CH-A2- 714 370
- CH-A2- 714 600
- DE-B- 1 204 144
- FR-A- 1 276 204
- FR-A- 1 314 364

## Description

### Domaine technique de l'invention

L'invention concerne le domaine du pivotement d'éléments rotatifs dans le domaine horloger. En particulier, l'invention concerne un mouvement mécanique horloger comprenant un résonateur mécanique dont le balancier est pivoté magnétiquement, c'est-à-dire qu'il est guidé en rotation essentiellement par un dispositif magnétique.

### Arrière-plan technologique

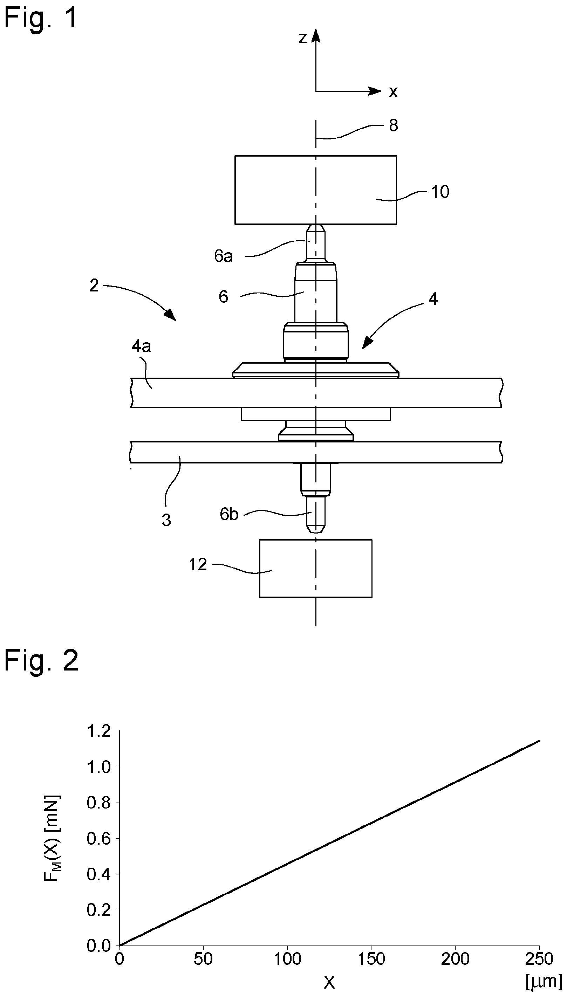

Il est connu du document WO 2012/062524 un procédé de guidage en pivotement d'un composant horloger, notamment d'un balancier, et un dispositif de guidage en pivotement d'un tel composant horloger. Ce document enseigne d'orienter un balancier selon un axe de rotation donné en utilisant un dispositif magnétique de guidage en pivotement, formé d'une paire de pivots magnétiques. A la Figure 1 est représenté un résonateur mécanique 2 formé d'un balancier 4 associé à un spiral 3, ce balancier étant formé d'une masse inertielle 4a et d'un arbre 6 qui est muni de deux pivots magnétiques 6a, 6b pour guider en rotation le balancier, ces deux pivots magnétiques étant guidés en rotation par deux paliers magnétiques formés respectivement par deux aimants permanents 10 et 12. Ces aimants sont par exemple formés d'un alliage en terres rares, notamment de SmCo ou NdFeB. En particulier, ils sont constitués d'un matériau connu sous la référence VAC677_HR. L'arbre 6 du balancier est constitué d'un matériau ayant une perméabilité magnétique élevée, par exemple d'un acier. Un acier au carbone, connu sous la référence 20_AP, peut avantageusement être utilisé. Un des deux aimants est prévu plus puissant que l'autre, de sorte qu'un des deux pivots 6a, 6b de l'arbre 6 est en contact avec l'aimant le plus puissant 10 (ou avec un contre-pivot intermédiaire, par exemple un disque en matériau dur poli tel un rubis synthétique), alors que l'autre pivot demeure à une petite distance de l'aimant le moins puissant 12 (ou d'un disque intermédiaire de protection de cet aimant, notamment un contre-pivot usuel) et demeure donc normalement sans contact avec le palier magnétique correspondant. Un tel agencement pour guider magnétiquement en rotation un balancier-spiral présente des avantages majeurs, en particulier en diminuant les frottements relativement à deux paliers mécaniques usuels.

La Figure 2 donne la courbe théorique d'une force de rappel magnétique F_{M} en fonction d'un déplacement radial X du balancier 4 depuis l'axe de rotation 8 de ce balancier pour le dispositif magnétique de guidage du type représenté à la Figure 1. L'axe de rotation du balancier est défini par l'axe géométrique passant par le milieu des deux aimants 10 et 12. On observe que la fonction F_{M} (X) est sensiblement linéaire pour de petits déplacements. Ainsi, avec un tel agencement, la force de rappel magnétique augmente proportionnellement avec un déplacement radial du balancier depuis son axe de rotation donné. Ceci pose un problème de centrage du balancier 2, car la force de rappel est faible pour de petits déplacements du balancier depuis son axe de rotation prédéfini. De plus, ce problème de centrage du balancier est péjoré par le fait que les aimants usuels présentent souvent des inhomogénéités à l'échelle du millimètre. Or le diamètre des aimants 10, 12 est de l'ordre du millimètre. Ce problème de centrage pose un problème pour l'interaction du balancier avec l'échappement associé à ce balancier.

Le document FR1314364A divulgue, à la figure 4, un mécanisme horloger de guidage en rotation d'un élément pivotant autour d'un axe. Ce mécanisme réalise une suspension magnétique par répulsion, avec deux aimants seulement.

### Résumé de l'invention

La présente invention a pour objectif de résoudre le problème de centrage des paliers magnétiques guidant en rotation des éléments rotatifs de petites dimensions, en particulier dans le domaine horloger et plus spécifiquement le problème de centrage pour un guidage magnétique en rotation / pivotement du balancier d'un résonateur mécanique incorporé dans un mouvement mécanique horloger.

A cet effet, comme défini dans la revendication 1, l'invention concerne un mécanisme horloger comprenant un élément rotatif et un dispositif magnétique de guidage en rotation de cet élément rotatif, ce dispositif magnétique étant agencé de manière à exercer une force de rappel magnétique radiale sur l'élément rotatif lorsqu'un axe central de cet élément rotatif subit un déplacement radial relativement à un axe de rotation qui est prédéfini pour l'élément rotatif dans le mécanisme. Selon l'invention, le dispositif magnétique comprend une paire d'aimants annulaires dont le premier aimant annulaire est porté par l'élément rotatif, de manière que son centre demeure confondu avec ledit axe central, et le second aimant annulaire est porté par une structure du mécanisme de manière que son centre demeure confondu avec ledit axe de rotation. Lorsque l'axe central de l'élément rotatif est confondu avec l'axe de rotation, le premier aimant annulaire et le second aimant annulaire s'étendent dans des plans généraux parallèles et orthogonaux à l'axe de rotation, en présentant entre eux un espace intermédiaire, et le second aimant annulaire est au moins partiellement superposé axialement au premier aimant annulaire, ces premier et deuxième aimants annulaires étant agencés en attraction magnétique de manière à engendrer l'un sur l'autre une première force magnétique axiale et, sensiblement dès que l'axe central de l'élément rotatif s'écarte radialement de l'axe de rotation, une première force magnétique radiale.

Grâce aux caractéristiques de l'invention, le dispositif magnétique de guidage permet de centrer radialement l'élément rotatif de manière efficace, de sorte à limiter, en fonctionnement normal, tout déplacement radial de l'axe central de l'élément rotatif relativement à l'axe de rotation. En effet, deux aimants annulaires superposés et agencés en attraction magnétique permettent d'obtenir une force de rappel radiale relativement intense déjà pour de petits déplacements radiaux de l'élément rotatif relativement à l'axe de rotation prévu dans le mécanisme pour cet élément rotatif.

Selon un mode de réalisation avantageux, le dispositif magnétique comprend en outre au moins un premier aimant d'extrémité qui est agencé axialement en regard d'une première extrémité d'un arbre de l'élément rotatif, cet arbre étant formé au moins partiellement par un matériau ferromagnétique doux ou un matériau magnétique de sorte que le premier aimant d'extrémité exerce une deuxième force magnétique axiale, en attraction magnétique, sur l'arbre et, lorsque l'axe central de l'élément rotatif est radialement distant de l'axe de rotation, également une deuxième force magnétique radiale sur cet arbre, la deuxième force magnétique axiale ayant un même sens que la première force magnétique axiale.

Selon un mode de réalisation préféré, le premier aimant annulaire présente, du côté du deuxième aimant annulaire, une première pluralité de zones annulaires ayant des polarités alternées et le second aimant annulaire présente, du côté du premier aimant annulaire, une deuxième pluralité de zones annulaires présentant des polarités alternées, au moins deux zones annulaires de la première pluralité de zones annulaires étant, lorsque l'axe central de l'élément rotatif est confondu avec l'axe de rotation, sensiblement entièrement superposées axialement à deux zones annulaires respectives de la deuxième pluralité de zones annulaires et en attraction magnétique avec ces deux zones annulaires respectives.

### Brève description des figures

L'invention sera décrite ci-après de manière plus détaillée à l'aide des dessins annexés, donnés à titre d'exemples nullement limitatifs, dans lesquels :
- la Figure 1, déjà décrite, est une vue de côté montrant un dispositif magnétique de guidage d'un balancier-spiral selon l'art antérieur ;
- la Figure 2, déjà décrite, est un graphe de la force de rappel magnétique radiale exercée par le dispositif magnétique de la Figure 1 sur le balancier en fonction d'un déplacement radial de ce dernier ;
- la Figure 3 est une vue partielle, en perspective, d'un premier mode de réalisation d'un mécanisme selon l'invention ;
- la Figure 4 est une vue de côté, partiellement en coupe, du mécanisme de la Figure 3 ;
- la Figure 5 est une vue partielle, en perspective, d'un deuxième mode de réalisation préféré d'un mécanisme selon l'invention ;
- la Figure 6 représente en plan le premier aimant et le second aimant d'une paire d'aimants annulaires formant le dispositif magnétique de guidage en rotation d'un balancier-spiral dans une première variante du deuxième mode de réalisation ;
- les Figures 7A et 7B sont des graphes d'une première force de rappel magnétique radiale exercée, dans chacun des premier et deuxième modes de réalisation, par la paire d'aimants annulaires sur le balancier en fonction d'un déplacement radial de ce dernier et respectivement pour deux distances de séparation entre les premier et second aimants annulaires ;
- la Figure 8 représente en plan le premier aimant et le second aimant d'une paire d'aimants annulaires formant le dispositif magnétique de guidage en rotation d'un balancier-spiral dans une deuxième variante avantageuse du deuxième mode de réalisation ; et
- la Figure 9 représente en plan le premier aimant et le second aimant d'une paire d'aimants annulaires formant le dispositif magnétique de guidage en rotation d'un balancier-spiral dans une troisième variante avantageuse du deuxième mode de réalisation.

### Description détaillée de l'invention

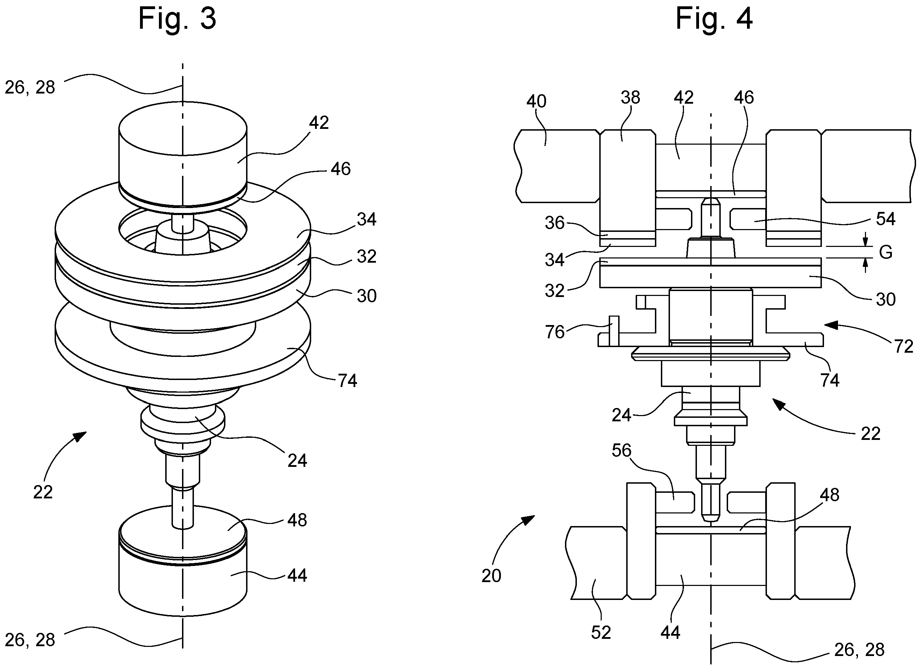

En référence aux Figures 3 et 4, on décrira un premier mode de réalisation d'un mouvement horloger, représenté en partie, selon l'invention.

Le mouvement horloger 20 comprend un résonateur mécanique, formé d'un balancier 22 ayant un arbre 24 définissant un axe central 26 du balancier, et un dispositif magnétique de guidage en rotation / en pivotement du balancier qui comprend une paire d'aimants annulaires, laquelle est constituée d'un premier aimant annulaire 32, agencé sur un support 30 porté par l'arbre 24, et d'un second aimant annulaire 34 agencé sur un support 36, en matériau ferromagnétique doux ou non magnétique, qui est collé sur un tube cylindrique 38 chassé, ou fixé d'une autre manière, dans une ouverture d'une platine 40 du mouvement horloger. A noter que la masse inertielle du balancier et le spiral du résonateur mécanique n'ont pas été représentés aux Figures 3 et 4 (pour ces éléments, voir Figure 1). On remarquera qu'un espace est laissé libre entre le flasque supportant la masse inertielle du balancier et le support 30, ceci pour l'agencement d'un dispositif 72 de couplage du balancier avec un échappement, en particulier un plateau 74 portant une cheville 76 prévue pour interagir de manière classique avec une ancre de l'échappement (non représentée).

De manière générale, le premier aimant annulaire 32 est porté par le balancier 22 de manière que son centre demeure confondu avec l'axe central 26, et le second aimant annulaire 34 est porté par une structure du mouvement horloger de manière que son centre demeure confondu avec l'axe de rotation 28, lequel est prédéfini pour le balancier dans le mouvement horloger. Dans la variante représentée, le support 30 est un support annulaire en matériau à faible perméabilité magnétique, notamment en matériau paramagnétique ou diamagnétique, qui est monté fixement sur l'arbre 24. Dans une variante, le support 30 comprend une plaquette annulaire mince en matériau ferromagnétique doux agencée directement sous le premier aimant annulaire 32. On remarquera que, à la Figure 4, l'arbre 24, le support 30 et le premier aimant annulaire 32 sont représentés en vue latérale, non coupés, alors que les autres éléments sont représentés en coupe selon un plan de coupe comprenant l'axe de rotation 28. Le balancier 22 est représenté dans une position centrée, telle que souhaitée en fonctionnement normal, de sorte que l'axe central 26 de l'arbre 24 est confondu avec l'axe de rotation 28.

Le dispositif magnétique de guidage en rotation du balancier est agencé de manière à exercer une force de rappel magnétique radiale F_{R} (X) sur ce balancier lorsque l'axe central 26 du balancier subit un déplacement radial X relativement à l'axe de rotation 28. Dans le premier mode de réalisation, le second aimant annulaire 34 est parallèle et sensiblement entièrement superposé axialement au premier aimant annulaire 32 lorsque l'axe central 26 de l'élément rotatif est confondu avec l'axe de rotation 28. Ces premier et deuxième aimants annulaires sont agencés en attraction magnétique de manière à engendrer l'un sur l'autre une première force magnétique axiale et, sensiblement dès que l'axe central 26 du balancier présente radialement un écart avec l'axe de rotation 28, une première force magnétique radiale F_{R} (X). A cet effet, le diamètre intérieur et le diamètre extérieur du premier aimant annulaire et du deuxième aimant annulaire sont sensiblement identiques, de préférence identiques. A titre d'exemple, le diamètre intérieur des deux aimants annulaires est compris entre 0.8 mm et 1.1 mm, et leur diamètre extérieur est compris entre 1.5 mm et 2.2 mm.

Dans le premier mode de réalisation, chacun des premier et second aimants annulaires est un aimant bipolaire, les deux aimants bipolaires annulaires ayant une même polarité (polarisation magnétique axiale, de même sens) de sorte à s'attirer l'un l'autre. Ces deux aimants bipolaires sont prévus relativement minces, par exemple entre 50 microns et 150 microns. Toutefois, dans d'autres mode de réalisation particuliers, ils peuvent être prévus plus épais pour augmenter la puissance magnétique. Ces aimants peuvent notamment être découpés au laser dans des plaquettes aimantées perpendiculairement au plan général de la plaquette ou être déposés en couche mince. La première force axiale et la première force radiale dépendent en particulier de l'espacement / la distance G entre les deux aimants annulaires. On verra par la suite des graphes comparant la première force radiale F_{R} (X), laquelle sert au centrage magnétique de l'arbre 24 du balancier 22, pour les premier et deuxième modes de réalisation et deux espacements différents.

Ensuite, de manière similaire à la réalisation antérieure décrite dans l'arrière-plan technologique, le dispositif magnétique comprend en outre un premier aimant d'extrémité 42 et un second aimant d'extrémité 44 qui sont respectivement agencés axialement en regard d'une première extrémité (premier pivot) et d'une seconde extrémité (second pivot) de l'arbre 24 du balancier 22. Le premier aimant d'extrémité 42 est agencé à l'intérieur du tube cylindrique 38 qui porte le second aimant annulaire 34 (aimant annulaire fixe relativement à la structure portant les premier et second aimants d'extrémité). A l'intérieur du tube cylindrique 38 est également agencé une pierre percée 54 qui forme une première butée radiale de sécurité pour l'arbre 24, pour ainsi limiter un déplacement radial de cet arbre en cas de choc, plus précisément de sa première extrémité. On notera que le premier aimant d'extrémité est recouvert d'une plaquette 46 en matériau dur, une sorte de pierre contre-pivot qui protège le premier aimant d'extrémité et qui permet un pivotement avec un moindre frottement et relativement peu d'usure. Le second aimant d'extrémité 44 est aussi agencé à l'intérieur d'un tube cylindrique 50, lequel est chassé, ou fixé d'une autre manière, dans une ouverture d'un pont 52, notamment un pont de balancier. A l'intérieur du tube cylindrique 50 est également agencé une pierre percée 56 qui forme une deuxième butée radiale de sécurité pour l'arbre 24, pour ainsi limiter un déplacement radial de cet arbre en cas de choc, plus précisément de sa deuxième extrémité. Le second aimant d'extrémité est aussi recouvert d'une plaquette 48 en matériau dur. A titre d'exemple, le diamètre des deux aimants d'extrémité est compris entre 0.8 mm et 1.0 mm et leur hauteur est comprise entre 0.4 mm et 0.6 mm.

L'arbre 24 est formé par un matériau ferromagnétique doux de sorte que le premier aimant d'extrémité 42 exerce une deuxième force magnétique axiale sur l'arbre, en attraction magnétique et de même sens que la première force magnétique axiale, et, lorsque l'axe central 26 du balancier est radialement distant de l'axe de rotation 28, également une deuxième force magnétique radiale sur cet arbre. Le second aimant d'extrémité 44 exerce une troisième force magnétique axiale sur l'arbre, en attraction magnétique et de sens opposé au sens de la deuxième force magnétique axiale, et, lorsque l'axe central 26 du balancier est radialement distant de l'axe de rotation 28, également une troisième force magnétique radiale sur cet arbre. L'intensité de la troisième force magnétique axiale est prévue inférieure à l'intensité totale de la première force magnétique axiale et de la deuxième force magnétique axiale. L'intensité totale de la deuxième force radiale et de la troisième force magnétique radiale présente une dépendance sensiblement linéaire à la distance entre l'axe central 26 et l'axe de rotation 28, comme montré par la courbe de la Figure 2. Les aimants d'extrémité 42 et 44 ont des axes centraux respectifs qui sont alignés et qui définissent l'axe de rotation 28 pour le balancier 22, cet axe de rotation étant ainsi prédéfini dans le mouvement horloger 20. L'axe de rotation demeure dans une position fixe donnée relativement à la structure porteuse du balancier 22, à savoir la platine 40 et le pont 52.

On remarquera que la fourniture de la paire d'aimants annulaires selon l'invention permet de diminuer de manière significative les dimensions des premier et deuxième aimants d'extrémité, plus particulièrement du premier aimant d'extrémité qui est prévu de plus grande taille que le second aimant d'extrémité dans l'art antérieur (force magnétique axiale exercée par le premier aimant d'extrémité sur l'arbre supérieure à celle exercée par le second aimant d'extrémité sur cet arbre dans l'art antérieur). En effet, étant donné la présence de la première force magnétique axiale engendrée par la paire d'aimants annulaires qui s'exerce dans le même sens que la deuxième force magnétique axiale, cette dernière n'a plus besoin d'avoir une intensité supérieure à celle de la troisième force magnétique axiale. De plus, comme on le verra encore par la suite, l'agencement de la paire d'aimants annulaires selon l'invention permet aussi de diminuer principalement la deuxième force magnétique radiale et également, de préférence dans une moindre mesure vu l'éloignement du deuxième aimant d'extrémité 44 de la paire d'aimants annulaires, la troisième force magnétique radiale tout en ayant un meilleur centrage magnétique du résonateur mécanique (balancier-spiral).

L'exposé qui précède permet de concevoir en outre deux modes de réalisation particuliers non représentés aux figures. Dans le premier mode de réalisation particulier, il n'est prévu qu'un seul aimant d'extrémité en sus de la paire d'aimants annulaires 32 et 34. Dans une première variante, le seul aimant d'extrémité est celui qui est situé du même côté de la masse inertielle que la paire d'aimants annulaires et qui produit une force magnétique axiale de même sens que cette paire d'aimants annulaires. Dans une deuxième variante, le seul aimant d'extrémité est l'aimant d'extrémité qui est situé du côté de la masse inertielle opposé au côté où est située la paire d'aimants annulaires et qui produit une force magnétique axiale de sens inverse à celui de la force magnétique axiale générée par la paire d'aimants annulaires. Dans cette deuxième variante, la force magnétique axiale de la paire d'aimants annulaires est prévue plus intense que dans la première variante. Dans le deuxième mode de réalisation particulier, le dispositif magnétique de guidage en rotation du résonateur mécanique incorporé dans un mouvement mécanique est constitué seulement de la paire d'aimants annulaires 32 et 34. Une variante de ce deuxième mode de réalisation particulier comprend avantageusement une paire d'aimants annulaires selon le deuxième mode de réalisation qui est décrit ci-après. Dans le deuxième mode de réalisation particulier, la pierre contre-pivot contre laquelle appuie en fonctionnement normal un pivot de l'arbre du balancier présente une petite cuvette évasée de maintien de ce pivot dans une position sensiblement centrale, c'est-à-dire sensiblement sur l'axe de rotation prévu pour le balancier. On remarquera qu'une telle petite cuvette évasée peut être avantageusement prévue dans tous les modes de réalisation de l'invention.

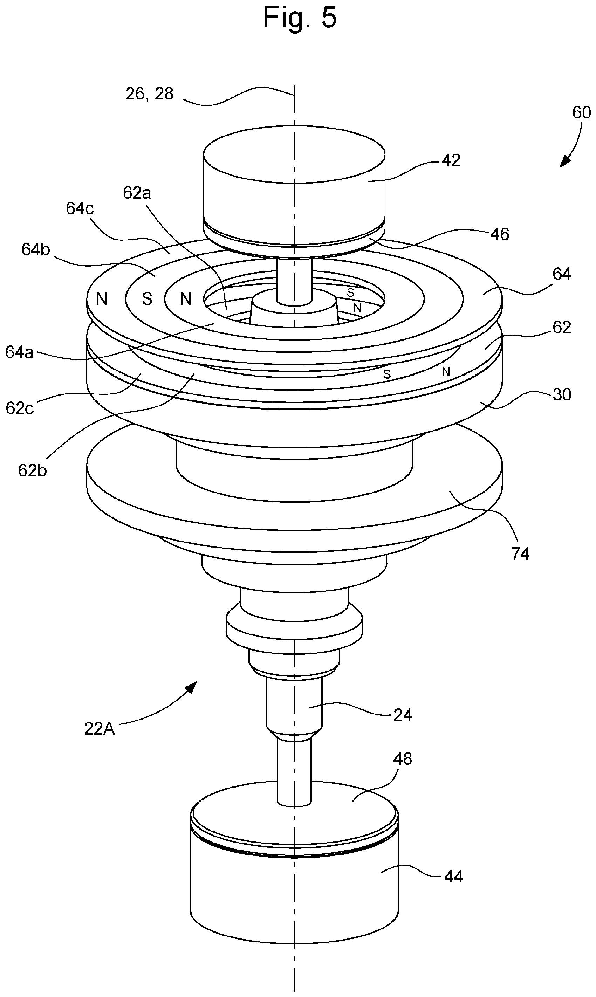

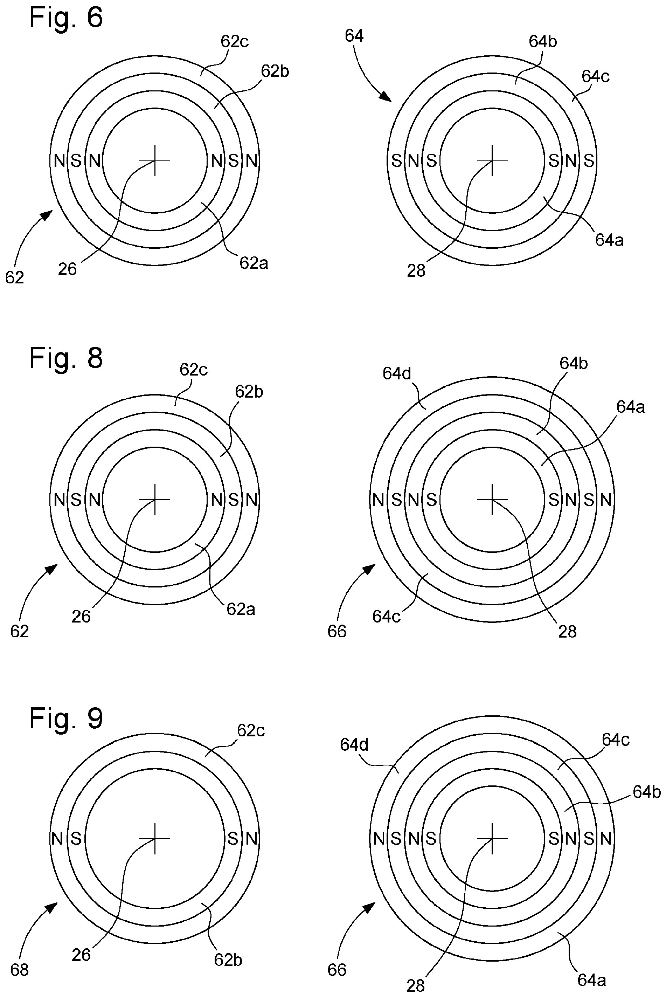

En référence aux Figures 5, 6, 8 et 9, on décrira ci-après un deuxième mode de réalisation d'un mécanisme 60 selon l'invention. Les références déjà décrites précédemment ne seront pas décrites à nouveau en détails. Dans une première variante de réalisation représentée aux Figures 5 et 6, le deuxième mode de réalisation se distingue du premier mode de réalisation principalement par le fait que le premier aimant annulaire 62 présente, du côté du deuxième aimant annulaire 64, une première pluralité de zones aimantées annulaires 62a, 62b et 62c ayant des polarités alternées (N, S, N) et le second aimant annulaire 64 présente, du côté du premier aimant annulaire 62, une deuxième pluralité de zones aimantées annulaires 64a, 64b et 64c présentant des polarités alternées (S, N, S). De manière générale, au moins deux zones aimantées annulaires de la première pluralité sont, lorsque l'axe central 26 du balancier 22A est confondu avec l'axe de rotation 28, sensiblement entièrement superposées axialement à deux zones aimantées annulaires respectives de la deuxième pluralité et en attraction magnétique avec ces deux zones annulaires respectives. Dans la première variante, la première pluralité comprend trois zones aimantées annulaires qui sont respectivement superposées entièrement aux trois zones aimantées annulaires de la deuxième pluralité. Dans la vue partielle en perspective de la Figure 5, le second aimant annulaire 64 est représentée sans son support, de sorte qu'on voit la face extérieure de cet aimant. Par contre, à la Figure 6 sont représentés séparément seulement les deux aimants annulaires 62 et 64, vu depuis l'espace intermédiaire entre ces deux aimants annulaires. Le deuxième mode de réalisation présente en outre une différence au niveau des deux aimants d'extrémité 42 et 44. Alors que dans le premier mode de réalisation ces deux aimants d'extrémité sont prévus sensiblement de même dimensions et de même puissance magnétique, le premier aimant d'extrémité 42 est prévu, dans le deuxième mode de réalisation, avec de moindres dimensions qui sont inférieures à celles du second aimant d'extrémité 44, lequel est bien plus éloigné de la paire d'aimants d'extrémité que le premier aimant d'extrémité qui est situé relativement proche de cette paire d'aimants annulaires.

Les deux aimants annulaires 62 et 64 sont avantageusement réalisés par un procédé de dépôt en phase vapeur d'alliage de terres rares dans une enceinte sous vide, en particulier par pulvérisation cathodique. L'épaisseur des deux aimants annulaires multipolaires peut par exemple être prévue dans la plage 10 à 50 microns, en particulier entre 15 microns et 30 microns. L'aimantation permanente de chaque couche d'alliage de terres rares déposée sur un support peut être réalisée dans une installation agencée pour pouvoir engendrer un champ magnétique intense qui traverse orthogonalement la couche déposée, avec les vecteurs de ce champ magnétique principalement dans un sens ou un sens opposé en fonction des différentes zones de la couche déposée, de sorte à obtenir les zones annulaires aimantées avec des polarités alternées. On obtient ainsi des zones aimantées annulaires bipolaires avec une aimantation axiale.

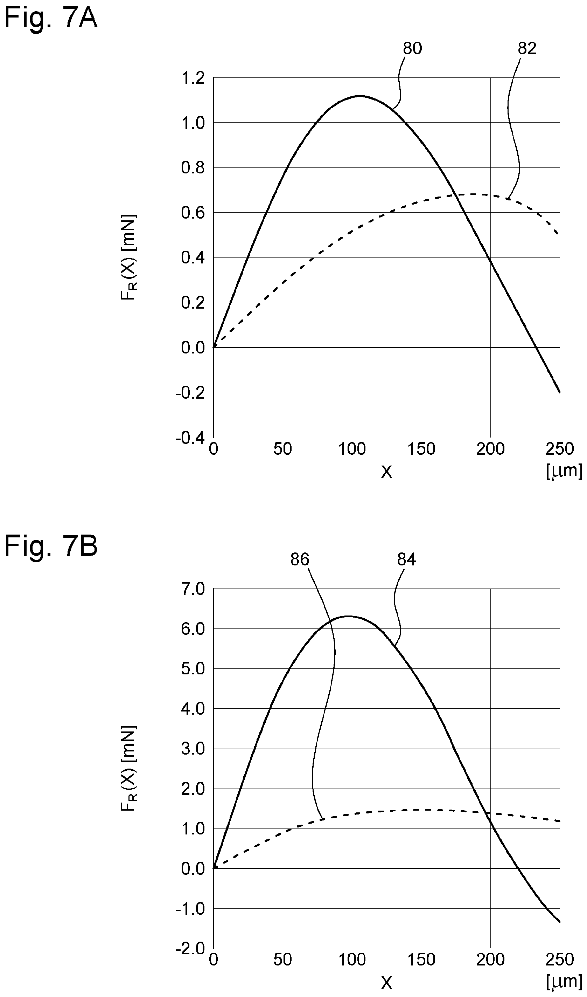

Le deuxième mode de réalisation permet d'augmenter de manière significative la force de centrage magnétique opérée par les deux aimants annulaires, comme ceci ressort des Figures 7A et 7B. La Figure 7A est un graphe représentant la force de rappel magnétique radiale F_{R} (X) engendrée par la paire d'aimants annulaires, présentant entre eux une distance G égale à 0.2 mm (200 microns), en fonction d'un déplacement radial X de l'axe central 26 du balancier relativement à l'axe de rotation 28, la courbe 80 donnant cette fonction pour le deuxième mode de réalisation alors que la courbe 82 donne cette fonction pour le premier mode de réalisation (les dimensions des aimants annulaires étant identiques). On remarquera que la force F_{R} (X) s'ajoute à une force F_{E} (X) qui est une force de rappel magnétique radiale engendrée par les deux aimants d'extrémité (voir Figure 2, toutefois à noter que la pente de la fonction linéaire dépend de la puissance magnétique des aimants d'extrémité, en particulier de leurs dimensions).

On observe que la paire d'aimants annulaires selon l'invention exerce rapidement une relativement grande force de rappel F_{R} (X) vers l'axe de rotation, la pente initiale des courbes 80 et 82 étant relativement forte sur les 50 premiers microns, contrairement à la fonction linéaire F_{E} (X). De plus, on observe que cette pente est bien plus grande dans le deuxième mode de réalisation que dans le premier mode de réalisation (plus de deux fois plus grande), ce qui est très avantageux pour obtenir un centrage magnétique efficace et précis.

La Figure 7B est un graphe similaire à celui de la Figure 7A, mais pour une distance G entre les deux aimants annulaires qui est égale à 0.1 mm (100 microns). La courbe 84 est relative au deuxième mode de réalisation alors que la courbe 86 est relative au premier mode de réalisation. On observe premièrement que la force de rappel magnétique radiale F_{R} (X) présente une valeur maximale (autour de X = 100 microns) bien plus élevée pour la distance G = 0.1 mm que pour la distance G = 0.2 mm (presque six fois plus grande). Il en résulte un gradient, sur les premiers 50 microns, plus élevé pour les courbes 84 et 86 que respectivement pour les courbes 80 et 82, ce gradient étant bien plus fort à la courbe 84 qu'à la courbe 86 (presque cinq fois plus fort). Ceci indique que le deuxième mode de réalisation est particulièrement efficace et avantageux avec une moindre distance entre les deux aimants annulaires, lesquels sont agencés parallèlement l'un à l'autre lorsque l'axe central 26 est parallèle à l'axe de rotation 28.

Aux Figures 8 et 9, similaires à la Figure 6, sont représentées deux autres variantes du deuxième mode de réalisation. Dans la deuxième variante de la Figure 8, de manière générale, le premier aimant annulaire 62 comprend N zones aimantées annulaires (62a, 62b, 62c), N étant supérieur à 1, et le second aimant annulaire 66 comprend N+1 zones aimantées annulaires (64a, 64b, 64c, 64d), les N zones aimantées annulaires du premier aimant annulaire 62 étant, lorsque l'axe central 26 du balancier est confondu avec l'axe de rotation 28, respectivement superposées axialement à N zones aimantées annulaires, incluant une zone intérieure (64a), du second aimant annulaire 64, la deuxième pluralité de zones aimantées annulaires comprenant une zone extérieure (64d) qui s'étend radialement au-delà du premier aimant annulaire 62. Dans l'exemple spécifique représenté à la Figure 8, le nombre entier N est égal à trois, soit N = 3. Cette deuxième variante permet d'augmenter la force de rappel magnétique radiale F_{R} (X) relativement à la première variante pour un même premier aimant annulaire 62 embarqué sur l'élément mobile en rotation, à savoir sur le balancier 22A.

Dans la troisième variante de la Figure 9, de manière générale, le premier aimant annulaire 68 comprend N zones aimantées annulaires (62b, 62c), N étant supérieur à 1, et le second aimant annulaire 66 comprend N+2 zones aimantées annulaires (64a, 64b, 64c, 64d), les N zones aimantées annulaires du premier aimant annulaire 68 étant, lorsque l'axe central 26 de l'élément rotatif (notamment le balancier) est confondu avec l'axe de rotation 28, respectivement superposées axialement à N zones aimantées annulaires internes (64b, 64c) du second aimant annulaire 66 qui sont situées entre une zone extérieure (64d) et une zone intérieure (64a) de la deuxième pluralité de zones aimantées annulaires de ce second aimant annulaire, ces zones intérieure et extérieure s'étendant radialement respectivement des deux côtés du premier aimant annulaire 68. Dans l'exemple spécifique représenté à la Figure 9, le nombre entier N est égal à deux, soit N = 2. Cette deuxième variante permet d'obtenir une force de rappel magnétique radiale F_{R} (X) relativement intense pour un premier aimant annulaire, embarqué sur le balancier, présentant de moindres dimensions et ainsi un moindre poids en tenant compte du fait que le support de ce premier aimant annulaire a également de moindres dimensions. On obtient ainsi un centrage magnétique très efficace en augmentant relativement peu l'inertie de l'élément rotatif, notamment du balancier.

## Revendications

1. Mécanisme horloger (20 ; 60) comprenant un élément rotatif (22 ; 22A) et un dispositif magnétique de guidage en rotation de cet élément rotatif, ce dispositif magnétique étant agencé de manière à exercer une force de rappel magnétique radiale (F_{R}) sur l'élément rotatif lorsqu'un axe central (26) de cet élément rotatif subit un déplacement radial (X) relativement à un axe de rotation (28) qui est prédéfini pour l'élément rotatif dans le mécanisme ; le dispositif magnétique comprenant une paire d'aimants annulaires dont le premier aimant annulaire (32 ; 62 ; 62 ; 68) est porté par l'élément rotatif, de manière que son centre demeure confondu avec ledit axe central, et le second aimant annulaire (34 ; 64 ; 66 ; 66) est porté par une structure (40) du mécanisme de manière que son centre demeure confondu avec ledit axe de rotation ; **caractérisé en ce que**, lorsque l'axe central de l'élément rotatif est confondu avec l'axe de rotation, le premier aimant annulaire et le second aimant annulaire s'étendent dans des plans généraux parallèles et orthogonaux à l'axe de rotation, en présentant entre eux un espace intermédiaire, et le deuxième aimant annulaire est au moins partiellement superposé axialement au premier aimant annulaire, les premier et deuxième aimants annulaires étant agencés en attraction magnétique de manière à engendrer l'un sur l'autre une première force magnétique axiale et, sensiblement dès que l'axe central de l'élément rotatif s'écarte radialement de l'axe de rotation, une première force magnétique radiale (F_{R} (X)).

2. Mécanisme horloger selon la revendication 1, **caractérisé en ce que** le dispositif magnétique comprend en outre au moins un premier aimant d'extrémité (42) qui est agencé axialement en regard d'une première extrémité d'un arbre (24) de l'élément rotatif (22 ; 22A), cet arbre étant formé au moins partiellement par un matériau ferromagnétique doux ou un matériau magnétique de sorte que le premier aimant d'extrémité exerce une deuxième force magnétique axiale, prévue en attraction magnétique et de même sens que la première force magnétique axiale, sur l'arbre et, lorsque l'axe central de l'élément rotatif est radialement distant de l'axe de rotation, également une deuxième force magnétique radiale sur cet arbre.

3. Mécanisme horloger selon la revendication 2, **caractérisé en ce que** le dispositif magnétique comprend un second aimant d'extrémité (44) agencé en regard d'une seconde extrémité de l'arbre (24), lequel est formé par un matériau ferromagnétique doux, le second aimant d'extrémité exerçant une troisième force magnétique axiale sur l'arbre, en attraction magnétique et de sens opposé au sens de la deuxième force magnétique axiale, et, lorsque l'axe central de l'élément rotatif est radialement distant de l'axe de rotation, également une troisième force magnétique radiale sur cet arbre, l'intensité de la troisième force magnétique axiale étant inférieure à l'intensité totale de la première force magnétique axiale et de la deuxième force magnétique axiale.

4. Mécanisme horloger selon la revendication 2 ou 3, **caractérisé en ce que** le premier aimant annulaire (32 ; 62 ; 68) est agencé sur un support annulaire (30) en matériau à faible perméabilité magnétique, notamment en matériau paramagnétique ou diamagnétique, qui est monté fixement sur ledit arbre (24).

5. Mécanisme horloger selon une quelconque des revendications précédentes, **caractérisé en ce que** le premier aimant annulaire (62 ; 62 ; 68) présente, du côté du deuxième aimant annulaire (64 ; 66 ; 66), une première pluralité de zones aimantées annulaires (62a, 62b, 62c ; 62b, 62c) ayant des polarités alternées et le second aimant annulaire présente, du côté du premier aimant annulaire, une deuxième pluralité de zones aimantées annulaires (64a, 64b, 64c ; 62a, 62b, 62c, 62d) présentant des polarités alternées, au moins deux zones aimantées annulaires de la première pluralité (62b, 62c) étant, lorsque l'axe central (26) de l'élément rotatif (22 ; 22A) est confondu avec l'axe de rotation (28), sensiblement entièrement superposées axialement à deux zones aimantées annulaires respectives (64b, 64c) de la deuxième pluralité et en attraction magnétique avec ces deux zones annulaires respectives.

6. Mécanisme horloger selon la revendication 5, **caractérisé en ce que** ladite première pluralité et ladite deuxième pluralité comprennent chacune trois zones aimantées annulaires (62a, 62b, 62c ; 64a, 64b, 64c).

7. Mécanisme horloger selon la revendication 5, **caractérisé en ce que** le premier aimant annulaire (62) comprend N zones aimantées annulaires (62a, 62b, 62c), N étant supérieur à 1, et le second aimant annulaire (66) comprend N+1 zones aimantées annulaires (64a, 64b, 64c, 64d), les N zones aimantées annulaires du premier aimant annulaire étant, lorsque l'axe central (26) de l'élément rotatif est confondu avec l'axe de rotation (28), respectivement superposées axialement à N zones aimantées annulaires, incluant une zone intérieure, du second aimant annulaire, la deuxième pluralité de zones aimantées annulaires comprenant une zone extérieure (64d) qui s'étend radialement au-delà du premier aimant annulaire.

8. Mécanisme horloger selon la revendication 5, **caractérisé en ce que** le premier aimant annulaire (68) comprend N zones aimantées annulaires (62b, 62c), N étant supérieur à 1, et le second aimant annulaire (66) comprend N+2 zones aimantées annulaires (64a, 64b, 64c, 64d), les N zones aimantées annulaires du premier aimant annulaire étant, lorsque l'axe central (26) de l'élément rotatif est confondu avec l'axe de rotation (28), respectivement superposées axialement à N zones aimantées annulaires internes (64b, 64c) du second aimant annulaire qui sont situées entre une zone extérieure (64d) et une zone intérieure (64a) de la deuxième pluralité de zones aimantées annulaires, ces zones intérieure et extérieure s'étendant radialement respectivement des deux côtés du premier aimant annulaire.

## Patentansprüche

1. Uhrwerk (20; 60), umfassend ein Drehelement (22; 22A) und eine Magnetvorrichtung zur Drehführung dieses Drehelements, wobei diese Magnetvorrichtung so angeordnet ist, dass sie eine radiale magnetische Rückstellkraft (F_{R}) auf das Drehelement ausübt, wenn eine Mittelachse (26) dieses Drehelements eine radiale Bewegung (X) relativ zu einer Drehachse (28), die für das Drehelement im Mechanismus vorgegeben ist, erfährt; wobei die magnetische Vorrichtung ein Paar ringförmiger Magnete umfasst, in denen der erste ringförmige Magnet (32; 62; 62; 68) von dem Drehelement getragen wird, damit sein Zentrum mit der Mittelachse übereinstimmt, und wobei der zweite ringförmige Magnet (34; 64; 66; 66) von einer Struktur (40) des Mechanismus getragen wird, sodass sein Zentrum mit der Drehachse zusammenfällt; **dadurch gekennzeichnet, dass** wenn die Mittelachse des Drehelements mit der Drehachse übereinstimmt, sich der erste ringförmige Magnet und der zweite ringförmige Magnet in allgemeinen Ebenen erstrecken, die parallel und orthogonal zur Drehachse sind, mit einem Zwischenraum dazwischen, und der zweite Ringmagnet zumindest teilweise axial mit dem ersten Ringmagneten überlagert ist, wobei der erste und der zweite ringförmige Magnet in magnetischer Anziehung angeordnet sind, um einander eine erste axiale Magnetkraft, und im Wesentlichen sobald die Mittelachse des Drehelements radial von der Drehachse abweicht, eine erste radiale Magnetkraft (F_{R}(X)) zu verleihen.

2. Uhrwerk nach Anspruch 1, **dadurch gekennzeichnet, dass** die Magnetvorrichtung ferner mindestens einen ersten Endmagneten (42) umfasst, der axial angeordnet einem ersten Ende eines Dorns (24) des Drehelements (22; 22A) zugewandt ist; wobei dieser Dorn zumindest teilweise durch ein weiches ferromagnetisches Material oder ein magnetisches Material gebildet ist, sodass der erste Endmagnet eine zweite axiale Magnetkraft auf den Dorn ausübt, um als magnetische Anziehung und in derselben Richtung wie die erste axiale Magnetkraft zu wirken, und, wenn die Mittelachse des Drehelements radial von der Drehachse entfernt ist, auch eine zweite radiale Magnetkraft auf diesen Dorn ausübt.

3. Uhrwerk nach Anspruch 2, **dadurch gekennzeichnet, dass** die Magnetvorrichtung einen zweiten Endmagneten (44) umfasst, der einem zweiten Ende des Dorns (24) zugewandt angeordnet ist, der durch ein weiches ferromagnetisches Material gebildet ist, wobei der zweite Endmagnet eine dritte axiale Magnetkraft auf den Dorn ausübt, als magnetische Anziehung und in der entgegengesetzten Richtung zur Richtung der zweiten axialen Magnetkraft, und wenn die Mittelachse des Drehelements radial von der Drehachse entfernt ist, auch eine dritte radiale Magnetkraft auf diesen Dorn ausübt, wobei die Intensität der dritten axialen Magnetkraft geringer ist als die Gesamtintensität der ersten axialen Magnetkraft und der zweiten axialen Magnetkraft.

4. Uhrwerk nach Anspruch 2 oder 3, **dadurch gekennzeichnet, dass** der erste ringförmige Magnet (32; 62; 68) auf einer ringförmigen Auflage (30) aus einem Material mit geringer magnetischer Permeabilität, insbesondere aus einem paramagnetischen oder diamagnetischen Material, angeordnet ist, das fest auf dem Dorn (24) montiert ist.

5. Uhrwerk nach irgendeinem der vorhergehenden Ansprüche, **dadurch gekennzeichnet, dass** der erste ringförmige Magnet (62; 62; 68) auf der Seite des zweiten ringförmigen Magneten (64; 66; 66), eine erste Vielzahl von ringförmigen magnetisierten Zonen (62a, 62b, 62c; 62b, 62c) mit alternierenden Polaritäten aufweist und der zweite ringförmige Magnet auf der Seite des ersten ringförmigen Magneten, eine zweite Vielzahl von ringförmigen magnetisierten Zonen (64a, 64b, 64c; 62a, 62b, 62c, 62d) mit alternierenden Polaritäten aufweist, wobei mindestens zwei ringförmige magnetisierte Zonen der ersten Vielzahl (62b, 62c), wenn die Mittelachse (26) des Drehelements (22; 22A) mit der Drehachse (28) übereinstimmt, im Wesentlichen vollständig axial überlagert werden von zwei jeweiligen ringförmigen magnetisierten Zonen (64b, 64c) der zweiten Vielzahl und in magnetischer Anziehung mit diesen beiden jeweiligen ringförmigen Zonen.

6. Uhrwerk nach Anspruch 5, **dadurch gekennzeichnet, dass** jede der ersten Vielzahl und der zweiten Vielzahl drei ringförmige magnetisierte Zonen (62a, 62b, 62c; 64a, 64b, 64c) umfasst.

7. Uhrwerk nach Anspruch 5, **dadurch gekennzeichnet, dass** der erste ringförmige Magnet (62) N ringförmige magnetisierte Zonen (62a, 62b, 62c) umfasst, wobei N größer als 1 ist, und der zweite ringförmige Magnet (66) N+1 ringförmige magnetisierte Zonen (64a, 64b, 64c, 64d) umfasst, wobei die N ringförmigen magnetisierten Zonen des ersten ringförmigen Magneten, wenn die Mittelachse (26) des Drehelements mit der Drehachse (28) übereinstimmt, jeweils axial von N ringförmigen magnetisierten Zonen überlagert werden, einschließlich einer internen Zone, des zweiten ringförmigen Magneten, wobei die zweite Vielzahl von ringförmigen magnetisierten Zonen eine äußere Zone (64d) umfasst, die sich radial über den ersten ringförmigen Magneten hinaus erstreckt.

8. Uhrwerk nach Anspruch 5, **dadurch gekennzeichnet, dass** der erste ringförmige Magnet (68) N ringförmige magnetisierte Zonen (62b, 62c), N größer als 1 ist, und der zweite ringförmige Magnet (66) N+2 ringförmige magnetisierte Zonen (64a, 64b, 64c, 64d), wobei die N ringförmigen magnetisierten Zonen des ersten ringförmigen Magneten wenn die Mittelachse (26) des Drehelements mit der Drehachse (28) übereinstimmt, jeweils axial überlagert werden von N inneren ringförmigen magnetisierten Zonen (64b, 64c) des zweiten ringförmigen Magneten, die sich zwischen einer äußeren Zone (64d) und einer inneren Zone (64a) der zweiten Vielzahl von ringförmigen magnetisierten Zonen befinden, wobei sich diese inneren und äußeren Zonen jeweils radial von beiden Seiten des ersten ringförmigen Magneten erstrecken.

## Claims

1. A horology mechanism (20; 60) comprising a rotary element (22; 22A) and a magnetic device for guiding this rotary element in rotation, this magnetic device being arranged so as to exert a radial magnetic return force (F_{R}) on the rotary element when a central axis (26) of this rotary element undergoes a radial movement (X) relative to an axis of rotation (28) which is predefined for the rotary element in the mechanism; the magnetic device comprising a pair of annular magnets in which the first annular magnet (32; 62; 62; 68) is carried by the rotary element, so that its centre remains coincident with said central axis, and the second annular magnet (34; 64; 66; 66) is carried by a structure (40) of the mechanism so that its centre remains coincident with said axis of rotation; **characterised in that**, when the central axis of the rotary element is coincident with the axis of rotation, the first annular magnet and the second annular magnet extend in general planes that are parallel and orthogonal to the rotational axis, with an intermediate space between them, and the second annular magnet is at least partially axially superimposed with the first annular magnet, the first and second annular magnets being arranged in magnetic attraction so as to impart on one another a first axial magnetic force and, substantially as soon as the central axis of the rotary element deviates radially from the axis of rotation, a first radial magnetic force (F_{R} (X)).

2. The horology mechanism according to claim 1, **characterised in that** the magnetic device further comprises at least one first end magnet (42) which is axially arranged facing a first end of an arbor (24) of the rotary element (22; 22A), this arbor being formed at least partially by a soft ferromagnetic material or a magnetic material so that the first end magnet exerts a second axial magnetic force on the arbor, to act as a magnetic attraction and in the same direction as the first axial magnetic force, and, when the central axis of the rotary element is radially remote from the axis of rotation, also a second radial magnetic force on this arbor.

3. The horology mechanism according to claim 2, **characterised in that** the magnetic device comprises a second end magnet (44) arranged facing a second end of the arbor (24), which is formed by a soft ferromagnetic material, the second end magnet exerting a third axial magnetic force on the arbor, as a magnetic attraction and in the opposite direction to the direction of the second axial magnetic force, and, when the central axis of the rotary element is radially remote from the axis of rotation, also a third radial magnetic force on this arbor, the intensity of the third axial magnetic force being lower than the total intensity of the first axial magnetic force and of the second axial magnetic force.

4. The horology mechanism according to claim 2 or 3, **characterised in that** the first annular magnet (32; 62; 68) is arranged on an annular rest (30) made of a material with a low magnetic permeability, in particular made of a paramagnetic or diamagnetic material, which is fixedly mounted on said arbor (24).

5. The horology mechanism according to any one of the preceding claims, **characterised in that** the first annular magnet (62; 62; 68) has, on the side of the second annular magnet (64; 66; 66), a first plurality of annular magnetised zones (62a, 62b, 62c; 62b, 62c) having alternate polarities and the second annular magnet has, on the side of the first annular magnet, a second plurality of annular magnetised zones (64a, 64b, 64c; 62a, 62b, 62c, 62d) having alternate polarities, at least two annular magnetised zones of the first plurality (62b, 62c) being, when the central axis (26) of the rotary element (22; 22A) is coincident with the axis of rotation (28), substantially entirely axially superimposed with two respective annular magnetised zones (64b, 64c) of the second plurality and in magnetic attraction with these two respective annular zones.

6. The horology mechanism according to claim 5, **characterised in that** each of said first plurality and said second plurality comprises three annular magnetised zones (62a, 62b, 62c; 64a, 64b, 64c).

7. The horology mechanism according to claim 5, **characterised in that** the first annular magnet (62) comprises N annular magnetised zones (62a, 62b, 62c), N being greater than 1, and the second annular magnet (66) comprises N+1 annular magnetised zones (64a, 64b, 64c, 64d), the N annular magnetised zones of the first annular magnet being, when the central axis (26) of the rotary element is coincident with the axis of rotation (28), respectively axially superimposed with N annular magnetised zones, including an internal zone, of the second annular magnet, the second plurality of annular magnetised zones comprising an external zone (64d) which extends radially beyond the first annular magnet.

8. The horology mechanism according to claim 5, **characterised in that** the first annular magnet (68) comprises N annular magnetised zones (62b, 62c), N being greater than 1, and the second annular magnet (66) comprises N+2 annular magnetised zones (64a, 64b, 64c, 64d), the N annular magnetised zones of the first annular magnet being, when the central axis (26) of the rotary element is coincident with the axis of rotation (28), respectively axially superimposed with N inner annular magnetised zones (64b, 64c) of the second annular magnet which are located between an external zone (64d) and an internal zone (64a) of the second plurality of annular magnetised zones, these internal and external zones extending radially respectively from both sides of the first annular magnet.
